(19) Europäisches Patentamt
European Patent Office
Office européen des brevets

(11) **EP 1 459 043 B1**

(12) **EUROPÄISCHE PATENTSCHRIFT**

(45) Veröffentlichungstag und Bekanntmachung des Hinweises auf die Patenterteilung:
**05.08.2009  Patentblatt 2009/32**

(51) Int Cl.:
*G01L 3/24* *(2006.01)*      *G01M 13/02* *(2006.01)*
*G01M 15/00* *(2006.01)*

(21) Anmeldenummer: **02795112.8**

(22) Anmeldetag: **06.12.2002**

(86) Internationale Anmeldenummer:
**PCT/EP2002/013823**

(87) Internationale Veröffentlichungsnummer:
**WO 2003/054501 (03.07.2003 Gazette 2003/27)**

(54) **VERFAHREN ZUR LEISTUNGSERMITTLUNG UND LEISTUNGSPRÜFSTAND FÜR EINEN VERBRENNUNGSMOTOR**

METHOD FOR THE DETECTION OF POWER AND POWER TEST STAND FOR A COMBUSTION ENGINE

PROCEDE DE DETERMINATION DE PUISSANCE ET BANC D'ESSAI DE PUISSANCE POUR UN MOTEUR DE COMBUSTION

(84) Benannte Vertragsstaaten:
**AT BE BG CH CY CZ DE DK EE ES FI FR GB GR IE IT LI LU MC NL PT SE SI SK TR**

(30) Priorität: **20.12.2001  DE 10162787**

(43) Veröffentlichungstag der Anmeldung:
**22.09.2004  Patentblatt 2004/39**

(73) Patentinhaber: **ABB AG**
**68309 Mannheim (DE)**

(72) Erfinder: **KEMNADE, H.-Jürgen**
**46286 Dorsten (DE)**

(56) Entgegenhaltungen:
US-A- 3 898 875      US-A- 3 942 363
US-A- 4 457 182      US-A- 5 361 628

• **PATENT ABSTRACTS OF JAPAN vol. 005, no. 126 (P-075), 14. August 1981 (1981-08-14) & JP 56 064638 A (MITSUBISHI MOTORS CORP), 1. Juni 1981 (1981-06-01)**

**Beschreibung**

Die Erfindung betrifft ein Verfahren zur Leistungsermittlung eines Prüflings, zum Beispiel eines Verbrennungsmotors, mit einem Leistungsprüfstand. Zudem betrifft die Erfindung eine Messvorrichtung zur Leistungsmessung des Prüflings mit wenigstens einem Messwertaufnehmer und mit einer Auswertevorrichtung, die mit dem wenigstens einen Messwertaufnehmer zusammenarbeitet und einen Leistungsprüfstand für den Prüfling mit der Messvorrichtung, mit einem Gestell, in dem der Prüfling in einer Prüfposition fixierbar ist, mit einem Anlasser für den Prüfling, der mit einer Kupplungs- und Messvorrichtung mit dem Prüfling verbunden ist und mit einer Datenverarbeitungsanlage zur Steuerung eines Leistungsmessversuches.

Verfahren zur Leistungsermittelung sind allgemein bekannt. So offenbart zum Beispiel das Dokument JP 56 064638 ein sequentielles Prüfverfahren, bei dem auf Verfahreinheiten montierte zu testende Motoren verschiedene Prüfstände durchlaufen, in denen durch geeignete Vorrichtungen die Kenndaten des Motors, wie z.B. Öldruck, Vibration während der Bewegung, Drehmoment etc. überprüft werden. US 3 898 875 offenbart ein Verfahren zum Testen von Elektromotoren. US 5 361 628 offenbart ein Verfahren Kalttesten von internen Verbrennungsmotoren.

Bisherige, allgemein bekannte Verfahren zur Leistungsermittlung an einem Prüfling erfordern eine aufwendige Prüfungsvorbereitung, bei welcher der Prüfling an die Prüfvorrichtung angeschlossen wird und normalerweise unter realen Belastungsbedingungen dessen Leistung ermittelt wird.

Die realen Belastungsbedingungen werden dabei häufig durch einen die Last simulierenden Bremsmotor oder eine Bremse verwirklicht, wobei der Bremsmotor oder die Bremse üblicherweise auf die Abtriebswelle des Prüflings wirkt und zudem ungefähr die gleiche Leistungsgröße und -fähigkeit haben muss wie der Prüfling, um die Leistung des Prüflings ertesten zu können. Dabei werden insbesondere Elektromotoren als Bremsmotoren ausgestaltet, deren Stromaufnahme zur Ermittlung der Leistung dient. Als derartige Bremsantriebe sind neben Elektromotoren auch Wirbelstrombremsen bekannt.

Soll beispielsweise ein Verbrennungsmotor eines Kraftfahrzeuges geprüft werden, ist hierfür zunächst eine beachtliche Rüstzeit notwendig, um ihn als Prüfling prüfbereit

zu machen, das heißt zum Beispiel der Anschluss der Medienversorgungssysteme an den Prüfling, wie Steuerungsleistungen, Treibstoffversorgung und Kühlwasserzufuhr. Danach wird eine vergleichsweise lange Zeit für die Belastungsprüfung selbst aufgewendet, die für den Kraftfahrzeugmotor typischerweise ca. 20 bis 30 Minuten dauert, um die erforderlichen Leistungswerte zu erhalten. Dies stellt einen erheblichen Aufwand dar.

Als Prüfling kommen prinzipiell alle leistungsabgebenden Verbrennungsmaschinen in Betracht, also beispielsweise Verbrennungskolbenmotoren von Kraftfahrzeugen oder Turbinen. Als Prüflinge sollen hier solche Maschinen bezeichnet werden, die eine Antriebsleistung von wenigstens 20 kW aufweisen.

Ausgehend von diesem Stand der Technik ist es die Aufgabe der Erfindung ein Verfahren zur Leistungsprüfung sowie einen Prüfstand anzugeben, welches beziehungsweise welcher die Prüfungszeit verkürzt.

Diese Aufgabe wird gelöst mit einem Verfahren zur Leistungsermittlung eines Prüflings mit den Merkmalen des Anspruches 1. Demgemäß benötigt das erfindungsgemäße Verfahren zur Leistungsermittlung eines Prüflings eine Messvorrichtung zur Erfassung des zeitlichen Verlaufs der Drehzahl und des Drehmomentenverlaufs einer Abtriebswelle des Prüflings, wobei zur Ermittlung der Leistung zu einem bestimmten Zeitpunkt ausschließlich der zeitliche Verlauf der Drehzahl und des Drehmoments gemessen wird, und wobei der Prüfling innerhalb einer solchen Zeitspanne geprüft wird, bei welcher keine Notwendigkeit einer Zwangskühlung besteht, das heißt die beim Betrieb entstehende Verlustwärme wird hauptsächlich durch den Prüfling aufgrund seiner Wärmekapazität aufgenommen und teilweise durch Strahlungs- und Konvektionswärme wieder an die Umgebung abgegeben.

Ein wesentlicher Vorteil des erfindungsgemäßen Verfahrens zur Leistungsermittlung des Prüflings besteht darin, dass nur noch die Drehzahl und das Drehmoment der Abtriebswelle in Verbindung mit der Zeit als Messgröße gemessen werden, wodurch der Instrumentierungs- und Messaufwand im Vergleich zu den bisher bekannten Verfahren erheblich reduziert ist. Zum anderen ist der Zeitraum innerhalb dessen die Prüfung durchgeführt wird, vorteilhaft kurz. Die Leistungsprüfung wird nämlich in einer derart kurzen Zeit durchgeführt, dass der durch die Verbrennung entstehende Wärmeverlust überwiegend von dem Prüfling aufgenommen wird, ohne dabei jedoch in unzulässiger Weise zu überhitzen, das heißt, dass bei der Leistungsprüfung keine Betriebszustände erreicht werden, die den Prüfling übermäßig verschleißen lassen oder gar schädigen. Hauptsächlich die Wärmekapazität des Prüflings wird dazu genutzt die Abwärme aufzunehmen. Demnach ist es auch nicht mehr notwendig, für die Dauer der Leistungsmessung eine Vorrichtung zur Zwangskühlung an den Prüfling anzuschließen. Insgesamt kann gemäß der Erfindung die Prüfzeit eines typischen Kolbenverbrennungsmotors eines Kraftfahrzeuges auf etwa 1 Minute verkürzt werden.

Bei einer vorteilhaften Weiterbildung des erfindungsgemäßen Verfahrens wird die Leistung des Prüflings zu dem bestimmten Zeitpunkt gemäß der Formel

$$P(t) = M \, [Nm] \, n(t) \, / \, 9550 \text{ berechnet,}$$

wobei

P(t) die Leistung P des Prüflings zum bestimmten Zeitpunkt (t) ist, wobei M(t) das Drehmoment bei dem bestimmten Zeitpunkt (t) ist, wobei n(t) die Drehzahl bei dem bestimmten Zeitpunkt (t) ist, und wobei die Konstante 9550 im Nenner der Formel die allgemein bekannte Konstante zur Ermittlung der Leistung aus einer Drehmomentenmessung entspricht.

Aus der Formel ist erkennbar, dass die Leistung nur noch von der Drehzahl und dem Drehmoment abhängig ist, demgemäß in vorteilhafter Weise einfach ist, wobei die Drehzahl an sich schon eine zeitabhängige Größe ist.

Bei einer erfindungsgemäßen Weiterbildung des Erfindungsgegenstandes wird der Prüfling in einem für diese Art der Leistungsprüfung eingerichteten Prüfstand getestet. Der Prüfstand wird auf die Prüfbedingungen optimal angepasst und bietet auf diese Weise entsprechend günstige Prüfbedingungen.

Bei der Prüfung wird der Prüfling zunächst durch einen Anlasser bis zum Erreichen einer vorgegebenen, für den Prüfling spezifischen Drehzahl angetrieben. Bei Verbrennungsmotoren sind häufig die Leerlaufdrehzahlen, typisch sind hier Drehzahlen zwischen 400 und 1400 Umdrehungen pro Minute (U/min), diejenigen, die für diesen Verfahrensschritt vorgegeben werden. Der Motor befindet sich dann unter besonders günstigen Startbedingungen. Bei Turbinen kann die typischen vorgegebenen Drehzahlen wesentliche höher sein, beispielsweise 3000 U/min und höher.

Bei einem weiteren erfindungsgemäßen Verfahrensschritt wird der Prüfling bei Erreichen einer zuvor festgelegten Drehzahl zum selbsttätigen Betrieb ein - beziehungsweise angestellt. Wenn besonders günstige Startbedingungen herrschen sollen, wird die festgelegte Drehzahl die vorgebbare Drehzahl sein. Prinzipiell reicht jedoch eine minimale Drehzahl als festgelegte Drehzahl aus, bei welcher der Prüfling gerade noch gestartet werden kann. Der Vorteil dabei ist es, dass ein für das Erreichen der festgelegten Drehzahl erforderlicher Anlasser besonders klein ausgelegt werden kann.

Ein weiterer erfindungsgemäßer Verfahrensschritt sieht vor, dass der Anlasser nach Erreichen der bestimmten Drehzahl oder wenn der Prüfling im selbsttätigen Betrieb läuft, abgeschaltet wird. Das heißt, der Prüfling gibt Leistung ab und treibt demnach seine Abtriebswelle bereits selbsttätig an, wenn der Anlasser abgestellt wird. Damit ist eine Beeinflussung der Leistungsmessung durch einen weiteren aktiven Antrieb beziehungsweise Bremsantrieb vermieden. Bei dieser Art der erfindungsgemäßen Leistungsmessung ist das ein besonderer Vorteil der Erfindung. Demgemäß dreht insbesondere der Läufer des Anlassers, wie bereits erläutert ohne Eigenantrieb, aber durch den Prüfling angetrieben mit.

Der Anlasser wird dann von dem Prüfling entkoppelt. Der Prüfling kann dann vorteilhaft schnell beschleunigt beziehungsweise drehzahlbeschleunigt werden.

In einer bevorzugten Ausgestaltung des erfindungsgemäßen Verfahrens wird der Prüfling im Eigenbetrieb bis auf eine maximale Nenndrehzahl beschleunigt. Damit wird eine vergleichsweise kurze Prüfzeit erreicht.

Die Prüfzeit wird weiter verkürzt, wenn die Beschleunigung unter Vorgabe eines Volllastwertes für die Drehzahl erfolgt. Die Prüfzeit ist dann vorteilhafterweise minimiert.

Eine weitere Ausgestaltung des erfindungsgemäßen Verfahrens sieht vor, eine Anzahl von Leistungen des Prüflings zu festgelegten Drehzahlwerten ermittelt wird, dass die Leistungspunkte zwischen den gemessenen Drehzahlen durch ein Interpolationsverfahren, insbesondere ein lineares, verbunden werden, und dass die derart ermittelte Leistungskurve in Abhängigkeit von der Drehzahl und gegebenenfalls die Messwerte gespeichert werden. Häufig ist es das Ziel der Leistungsermittlung neben einem Leistungspunkt, beispielsweise der maximalen Leistung oder eine Einzelleistung im Soll-Betriebspunkt, eine Leistungskurve zu erhalten, zum Beispiel, weil die Leistungscharakteristik eines Automotors ermittelt werden soll. Das wird vorteilhafterweise durch die soeben beschriebenen Verfahrensschritte erreicht.

Eine Weiterbildung des erfindungsgemäßen Verfahrens sieht vor, dass durch eine Auswertevorrichtung die Messwerte aufgenommen und gegebenenfalls graphisch dargestellt sowie zur weiteren Datenverarbeitung bereitgestellt werden. Demgemäß stellt die Auswertevorrichtung sowohl die Messdaten, als auch die Datenauswertung, in Form von gespeicherten Ergebnisdaten oder bereits als Graphik dar. Damit kann durch eine erste Blickkontrolle die Güte des Prüflings erkannt werden. Ebenso wird es aufgrund der gemessenen Daten und der Ergebnisdaten möglich, die Kontrolle, ob die Leistungsprüfung erfolgreich war, zu automatisieren.

Des weiteren wird die Aufgabe der Erfindung gelöst durch die Merkmale des Anspruches 16. Demgemäß betrifft die Erfindung einen Leistungsprüfstand für einen Verbrennungsmotor, zur Durchführung des erfindungsgemäßen Verfahrens mit einer Messvorrichtung, mit einem Gestell, in dem der Prüfling in einer Prüfposition fixierbar ist, mit einem Anlasser für den Prüfling, der wenigstens zeitweise mit dem Prüfling verbindbar ist und mit einer Datenverarbeitungsanlage zur Steuerung eines Leistungsmessversuches, **dadurch gekennzeichnet, dass** eine Vorrichtung zur Zwangskühlung des Prüflings, insbesondere eine Vorrichtung zur Flüssigkühlmittelzuführung, vermieden ist, und dass der Prüfling innerhalb einer solchen Zeitspanne prüfbar ist, bei welcher keine Notwendigkeit einer Zwangskühlung besteht.

Mit einem derartig ausgestalteten Leistungsprüfstand ist das erfindungsgemäße Verfahren auf besonders günstige Weise realisierbar. Demgemäß wird die Leistungsmessung in einer solchen Zeitspanne durchgeführt, bei der eine Zwangskühlung vermieden ist. Unter Zwangskühlung kann jede Art der Kühlmittelzufuhr, wie beispielsweise ein Kühlwasserkreislauf oder ein Kühlluftgebläse oder -system verstanden werden. Solche sonst üblichen Vorrichtungen fehlen dem Erfindungsgegenstand vollständig und stellen einen wesentlichen Vorteil der Erfindung dar. Die Prüfzeit ist demgemäß vorteilhaft verkürzt und zudem der Messaufwand durch die verkürzte Prüfzeit sowie durch die zu messende Drehzahl, Drehmomentenmessung beziehungsweise durch die Zeitmessung im Messaufwand verringert.

Bei einer vorteilhaften Ausgestaltung des erfindungsgemäßen Leistungsprüfstandes ist es vorgesehen, dass eine Tischvorrichtung vorhanden ist, die mit dem Gestell fest verbunden und auf welcher der Anlasser angeordnet ist. Eine derartige Anordnung ist übersichtliche und insbesondere der Anlasser in einfacher Weise zugänglich. Zudem schafft die Tischvorrichtung eine Arbeitsebene, auf die sich besonders günstig Bezug nehmen lässt. Beispielsweise lässt sich besonders einfache die Mess- und Kupplungsvorrichtung ebenfalls auf der Tischvorrichtung montieren. Zudem kann die Tischebene als Orientierung zur Ausrichtung des Prüflings zur Vorbereitung der Leistungsmessung dienen.

Eine günstige Weiterbildung des erfindungsgemäßen Leistungsprüfstands erhält man, wenn der Anlasser lediglich dafür ausgelegt ist, den Prüfling auf eine zuvor bestimmte Drehzahl, insbesondere eine Leerlaufdrehzahl anzutreiben. Damit ist eine besonders kleine, platzsparende Ausgestaltung des Anlassers erreicht. Die Funktion des Anlassers ist, im Unterschied zu den sonst üblichen Bremsmotoren bereits dadurch erreicht, dass der Anlasser den Prüfling auf eine bestimmte Drehzahl schleppt. Die Drehzahl kann bei einem Verbrennungsmotor bereits dann erreicht sein, wenn eine Anlassdrehzahl den Start des Motors zum selbsttätigen Lauf ermöglicht. Dabei besteht jedoch das Risiko, dass der Motor aus irgendwelchen Gründen nicht gleich beim ersten Versuch startet. Daher kann der Anlasser auch insbesondere derart ausgelegt sein, dass der den Prüfling bis zu einer Leerlaufdrehzahl antreibt. Erfahrungsgemäß sichert dies derart gute Startbedingungen, dass der Prüfling regelmäßig bereits beim ersten Startversuch startet.

Eine wichtige Maßnahme bei einer Leistungsmessung ist die sichere Fixierung des Prüflings auf oder an dem Leistungsprüfstand. Neben der wenigstens einen dafür vorgesehenen Haltevorrichtung ist in einer Fortbildung des Erfindungsgegenstandes zusätzlich ein Niederhalter am Gestell angeordnet, durch den der Prüfling gegen das Gestell oder die Hebevorrichtung verspannbar und für den Prüfbetrieb gegen Losrütteln sicherbar ist. Dieses Bauelement verbessert die Verbindung des Prüflings mit dem Prüfstand in vorteilhafter Weise. Die Gefahr des Losrüttelns des Prüflings ist dadurch geringer. Zudem werden die vom Prüfling verursachten Schwingungsanregungen und Vibrationen besser gedämpft.

Der erfindungsgemäße Leistungsprüfstand ist in einer speziellen Ausgestaltung mit einer Datenverarbeitungsanlage versehen, welche dafür eingerichtet ist, die Auswertung der Messung vorzunehmen. Bei dieser Ausgestaltung sind die Funktionen der Auswerteeinrichtung in die Datenverarbeitungsanlage integriert, das heißt in dieser Variante des Erfindungsgegenstandes kann die Auswertevorrichtung günstigerweise entfallen.

Weitere vorteilhafte Ausgestaltungen des Erfindungsgegenstandes sind den abhängigen Ansprüchen zu entnehmen.

Anhand des folgenden Ausführungsbeispiels sollen die Erfindung, die Vorteile sowie weitere Verbesserungen der Erfindung dargestellt und näher erläutert werden.

Es zeigen:

Fig. 1    eine Schnittansicht eines Leistungsprüfstands und

Fig. 2    eine Draufsicht auf den Leistungsprüfstand.

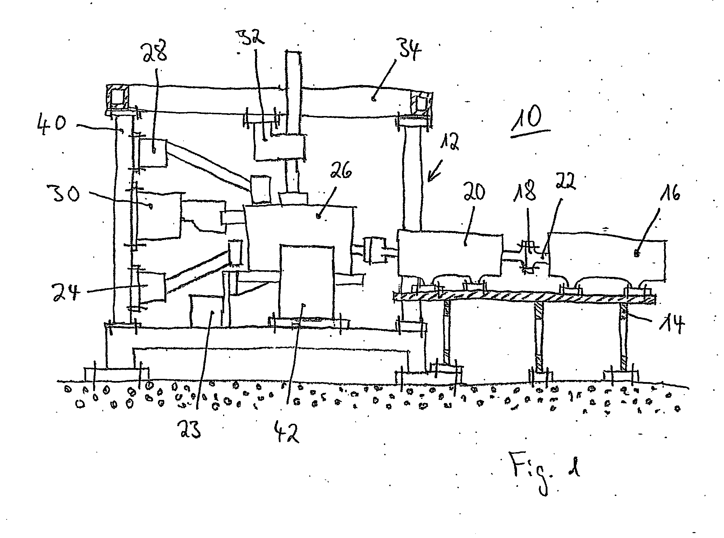

Fig. 1 zeigt eine Schnittansicht eines Leistungsprüfstands 10. Als Basis des Leistungsprüfstandes dient ein Gestell 12, an dem eine Tischvorrichtung 14 angeordnet ist.

Auf der Tischvorrichtung 14 ist eine Anlasservorrichtung 16 angeordnet, an der mittels einer Kupplung 18 eine Kupplungs- und Prüfvorrichtung 20 verbunden ist. Die Kupplung 18 ist in dieser Ausgestaltung starr ausgeführt, so dass die Anlasservorrichtung 16 und die Kupplungs- und Prüfvorrichtung 20 im gekuppelten Zustand eine Anlassereinheit bilden.

Die Kupplungs- und Prüfvorrichtung 20 ist an einem Prüfling 26 ankuppelbar. Die Ankupplung erfolgt ungedämpft. Auf diese Weise wird die Leistung, insbesondere die Leistungscharakteristik im Prüfbetrieb von dem Prüfling 26 möglichst direkt an die Kupplungs- und Prüfvorrichtung 20 übertragen.

In diesem Beispiel ist der Prüfling 26 eine 4-Zylinder 4 Takt Reihenmotor. Als Prüfling 26 kommt aber auch jede andere leistungsabgebende Verbrennungsmaschine in Betracht, wie zum Beispiel Zweitakt-, Dieselmotoren und Turbinen.

Die Kupplungs- und Prüfungsvorrichtung 20 weist in diesem Beispiel einen Inkrementalgeber mit 2500 Inkrementen pro 360 Grad, eine Signalaufbereitung und eine Messwerterfassungsvorrichtung mit einer Datenerfassungsrate von wenigstens 200 kHz auf. Darüber hinaus sind an der Anlasser- und Prüfvorrichtung 20 alle Signalaufnehmer angebracht, die zur Erfassung der Messwerte, die über eine Welle 22 in die Anlasser- und Prüfvorrichtung 20 gelangen und aufgenommen werden sollen. Die Auswertevorrichtung ist im dargestellten Beispiel eine Datenverarbeitungsanlage in Form eines Personalcomputers (PC), der in der Figur jedoch nicht gezeigt ist und über eine ebenfalls nicht dargestellte Signalleitung mit der Anlasser- und Prüfvorrichtung 20 verbunden ist. Die Auswertevorrichtung übernimmt die Auswertung der vom Leistungsprüfstand 10, kurz Prüfstand 10 erhaltenen Messdaten.

Mit einer Hebevorrichtung 23 ist in diesem Beispiel der Reihenmotor 26 aus einem nicht in der Figur dargestellten Transportsystem herausnehmbar und wird in die Prüfposition am Prüfstand verbracht. Als Transportsystem kommt beispielsweise ein heute übliches führerloses Einzeltransportsystem in Betracht. Es ist aber ohne weiteres jedes für den Reihenmotor 26 beziehungsweise den Prüfling 26 geeignete kontinuierliche oder diskontinuierliche Fördersystem verwendbar. Der erfindungsgemäße Prüfstand 10 ist auf einfache Weise auf die betreffenden Gegebenheiten konstruktiv anpassbar.

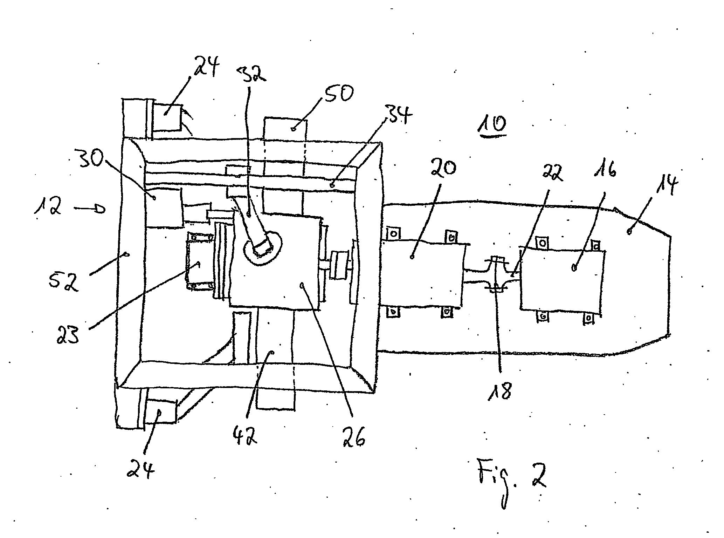

Des weiteren sind an dem Gestell 12 zwei Schraubvorrichtungen 24 beweglich angeordnet, von denen nur eine in dieser Figur sichtbar ist, die den auf der Transportvorrichtung montierten Reihenmotor 26 lösen. Die Hebevorrichtung 23 verbringt den Reihenmotor 26 in eine Prüfposition in eine erste 42 und eine zweite Haltevorrichtung 50 den Reihenmotor in der Prüfposition fixieren, indem diese von zwei Seiten in einer horizontalen Ebene gegeneinander verschoben werden und der zwischen den Haltevorrichtungen 42, 50 befindliche Reihenmotor 26 derart verklemmt und gehalten wird. Von den Haltevorrichtungen 42, 50 ist nur die erste Haltevorrichtung 42 in dieser Figur gezeigt. Jedoch ist die Wirkungsweise beider Haltevorrichtungen 42, 50 in der Figur 2 erkennbar.

Eine Multikupplungsvorrichtung 28 ist dafür vorgesehen, eine nicht weiter dargestellte Kraftstoffversorgungsleitung mit einem Kraftstoffsystem des Reihenmotors 26 zu verbinden und elektrische Versorgungs-, Steuer- sowie Signalleitungen mit den entsprechenden Leitungen des Reihenmotors 26 zu verbinden. Auch die Multikupplungsvorrichtung 28 ist in drei Raumrichtungen bewegbar, um an die entsprechende Kupplungsstelle am Reihenmotor 26 anschließen zu können.

Eine Abdichtungsvorrichtung 30 ist an ein Abgassystem des Reihenmotors 26 dicht schließend anschließbar, wobei im Betriebsfall entstehende Abgase des Reihenmotors 26 über eine nicht in der Figur dargestellte Abgasleitung von dem Prüfstand 10 weg geleitet werden. Um diese Funktion zu erfüllen, ist die Abdichtvorrichtung 30, vergleichbar mit der Multikupplungsvorrichtung 28, in den drei Raumrichtungen bewegbar.

Ein Niederhalter 32 ist an einem oberen Querträger 34 des Gestells 12 beweglich angeordnet, wobei der Niederhalter 32 zur zusätzlichen Fixierung des Reihenmotors 26, insbesondere während des Testbetriebes vorgesehen ist. Dieser wird senkrecht von oben an den Reihenmotor 26 heranbewegt und mit einer vorgegebenen Kraft beaufschlagt, also verspannt. Im folgenden wird ein vorteilhafter Verfahrensablauf anhand des Ausgestaltungsbeispiels des erfindungsgemäßen Leistungsprüfstandes 10 gemäß Fig. 1 näher beschrieben.

Mit der Transportvorrichtung wird der Reihenmotor 26 zu dem Prüfstand 10 transportiert und in eine dafür vorgesehene Entladeposition im Bereich des Gestells 12 verbracht. Mit den zwei sich gegenüberliegenden Schraubvorrichtungen 24 wird zunächst der Reihenmotor 26 von einer Transporthalterung gelöst. Die Hebevorrichtung 23 befindet sich unterhalb der Entladeposition und wird nun im wesentlichen nach oben bewegt und hebt dabei den Reihenmotor 26 aus der Transportvorrichtung in eine Prüfposition. In diesem Beispiel verbleibt die Transportvorrichtung in der Entladeposition im Prüfstand 10. Es ist aber auch denkbar, dass diese in eine Parkposition außerhalb des Prüfstandbereiches bewegt wird.

Mit den Haltevorrichtungen 42, 50 wird der Reihenmotor 26 in der Prüfposition fest verspannt, das heißt, dass die Haltevorrichtung 42, 50 den Reihenmotor 26 in einer horizontalen Richtung mit einer zuvor festgelegten Kraft beaufschlagen. Zudem verhindert die Hebevorrichtung 23, dass der Reihenmotor 26 nach unten bewegt werden kann.

Der Prüfling 26 beziehungsweise der Reihenmotor 26 ist nun fest mit dem Prüfstand 10 verbunden beziehungsweise gegen dessen Gestell 12 verspannt. Der Niederhalter 32 wird von oben gegen den Reihenmotor 26 in eine vorgegebene Position verfahren und derart der Reihenmotor 26 gegen den Prüfstand 10 beziehungsweise die Hebevorrichtung 23 verspannt. Damit wird eine zusätzliche Fixierung des Reihenmotors 26 erreicht, der demgemäß dann an zwei Stellen in horizontaler Richtung sowie von oben und unten an zwei weiteren Stellen in vertikaler Richtung gehalten wird.

Die Multikupplungsvorrichtung 28 schließt an die dafür vorgesehene Gegenkupplung beziehungsweise an eine entsprechende Stelle am Reihenmotor 26 an. In einem weitere Verfahrensschritt wird die Abdichtvorrichtung 30 an das Abgassystem des Reihenmotors 26 angeschlossen. Dabei ist die Reihenfolge der auszuführenden Schritte nicht zwangsläufig wie in dem genannten Beispiel festgelegt. ES gibt eine Anzahl verschiedener zweckmäßiger Sequenzen, wobei es auch möglich ist, dass verschiedene Schritte parallel ausgeführt werden können. Beispielsweise kann der Anschluss die Abdichtvorrichtung 30 in diesem Beispiel zeitlich parallel zum Anschluss der Multikupplungsvorrichtung 28 erfolgen, sofern sich die Bewegungsabläufe der Vorrichtung nicht gegenseitig stören.

In dem Beispiel werden die Abläufe am Prüfstand 10 und der Leistungsprüfung mit einer Mess- und Steuerungseinrichtung gesteuert und gemessen, die nicht in der Figur gezeigt ist, jedoch mittels entsprechender Steuer- und Signalkabel mit den verschiedenen Vorrichtungen des Prüfstandes 10 verbunden ist. Nachdem der Reihenmotor 26 an seiner Prüfposition fixiert wurde, kann das Verfahren zur Leistungsermittlung beginnen.

Hierzu wird der Reihenmotor 26 zunächst mit der über die Kupplungs- und Prüfvorrichtung 20 angekoppelten Anlasservorrichtung 16 bis auf eine Leerlaufdrehzahl von ca. 850 Umdrehungen pro Minute (U/min) beschleunigt. Kraftfahrzeugmotoren haben Leerlaufdrehzahlen von üblicherweise ca. 450 bis 1000 U/min.

Im Prinzip gibt es nun zwei erfindungsgemäße Möglichkeiten den Leistungstest weiterzuführen. Entweder wird nun die Anlasservorrichtung 16 von der Mess- und Kupplungsvorrichtung 20 automatisch abgekuppelt oder einfach nur abgeschaltet und dreht als angekuppelte Masse mit der Antriebswelle des Reihenmotors 26 mit. Unabhängig davon, wie mit der Anlasservorrichtung 16 verfahren wird, wird der Reihenmotor 26 von der Mess- und Steuerungseinrichtung angelassen und mit Eigenantrieb betrieben.

In beiden Fällen ist es aber von Vorteil, dass die Anlasservorrichtung 16 nur auf eine vergleichsweise kleine Leistung ausgelegt zu werden braucht. Die Anlasservorrichtung 16 muss nämlich nur das Hochschleppen des Reihenmotors 26 bis zu der Leerlaufdrehzahl leisten und ist dann nicht weiter aktiv, das heißt beispielsweise als Bremse, an der Ermittlung der Leistung beteiligt. Die sonst üblichen Antriebe in der gleichen Leistungsgröße wir der Prüfling sind vorteilhafterweise vermieden.

In beiden Fällen kann der Messvorgang zur Leistungsermittlung beginnen, indem der Reihenmotor 26 mit Vollastvorgabe im Eigenbetrieb bis auf dessen maximale Nenndrehzahl beschleunigt wird. Dieser Vorgang wird noch 4-mal wiederholt. Während der gesamten Versuchszeit wird der zeitliche Verlauf der Drehzahl und des Drehmoments der Antriebswelle des Reihenmotors 26 durch die Mess- und Steuervorrichtung erfasst. Eine Beschleunigung von Leerlaufdrehzahl bis zur maximalen Nenndrehzahl dauert in diesem Beispiel 12 Sekunden. Mit den Wiederholungen dauert die gesamte Leistungsprüfung lediglich 90 Sekunden. Das ist eine Zeitspanne, die der Reihenmotor 26 ohne jegliche Fremdkühlung, also beispielsweise ohne Kühlwasser betrieben werden kann.

Es hat sich herausgestellt, dass die heute üblichen Kraftfahrzeugmotoren, insbesondere die Diesel- und die Benzinhubkolbenmotoren mit drei Wiederholungen bereits sehr gute Leistungsmesswerte innerhalb einer Messzeit von insgesamt einer Minute ergeben. Häufigere Wiederholungen machen die Messung statistisch entsprechend aussagefähig, gehen jedoch zu Lasten der Prüfzeit, welche letztlich die Anzahl der Prüfungen je Zeiteinheit bestimmt.

Das Erreichen der vergleichsweise kurzen Testzeit wird auch dadurch unterstützt, dass der Reihenmotor 26 nicht wie im Stand der Technik bisher üblich, durch eine der eigenen Leistung entsprechenden Last, wie beispielsweise eine Wirbelstrombremse, belastet wird, um die Leistungskurve zu erhalten, sondern es werden nur die an der Antriebswelle angeschlossenen Drehmassen beschleunigt, das heißt bis auf die maximale Drehzahl gebracht, um die Leistungsmessung durchzuführen. Mit den gemessenen zeitlichen Verläufen der Drehzahl und des Drehmoments wird zunächst für eine Anzahl von festgelegten Drehzahlen die Leistung nach der Formel

$$P(t) = M(t) * n(t) / 9550 \text{ errechnet,}$$

beispielsweise für jede Drehzahl zwischen Leerlaufdrehzahl und maximaler Nenndrehzahl in Schritten von 100 U/min. Zu jedem der Drehzahlpunkte wird nun die Leistung $P(t)$ bestimmt, indem das gemessene Drehmoment in einem Drehzahlpunkt mit der Drehzahl multipliziert wird, und anschließend das Ergebnis durch die Konstante 9550 geteilt wird. Als Grundlage der Berechnung dienen die Messwerte. Die Berechnung wird um so besser, je genauer der zeitliche Verlauf der Drehzahl bestimmt wird. Im beschriebenen Beispiel ist, wie eingangs bereits beschrieben ein Inkrementalgeber mit 2500 Inkrementen pro 360 Grad in der Mess- und Kupplungsvorrichtung 20 eingebaut. Zudem wurde eine allgemein bekannte Messanordnung von Dehnungsmessstreifen zur Erfassung des Drehmomentenverlaufs auf einer Drehwelle der Mess- und Kupplungsvorrichtung 20 angeordnet. Die Messdaten werden mit einer Messkarte erfasst, die eine Datenerfassungsrate von größer 200 kHz aufweist. Die Mess- und Steuerungseinrichtung ist als Personal Computer (PC) ausgestaltet, der sowohl die Messwerterfassung und die Messdatenauswertung , als auch die Steuerung und Regelung der Prüfungsvor- und - nachbereitung sowie der Koordination der Bewegungen der Vorrichtungen zum Anschluss und zum Lösen des Reihenmotors 26 nach der Leistungsmessung übernimmt. Mit einer derartigen Messvorrichtung wurden Messwerte gemessen beziehungsweise Motorleistungen berechnet, die nur eine Ungenauigkeit +3% beziehungsweise -2% aufweisen. Jedenfalls können ohne weiteres die üblichen Anforderungen an die Messgenauigkeit von +/-5% ohne weiteres eingehalten werden.

Um eine Leistungskurve aus den berechneten Einzelpunkten zu erhalten, bietet sich ein Interpolationsverfahren an. Sind die Mess- und die Berechnungspunkte in ausreichender Anzahl gelegt, reicht in der Regel ein lineares Interpolationsverfahren aus, um zu hinlänglichen Ergebniskurven zu gelangen. Es können aber auch vorgegebene Polynome als Basis für eine Interpolation genommen werden.

Als vorteilhafte und aussagefähige Ergebnisse werden von der Auswertevorrichtung wahlweise die Leistung über der Drehzahl, die Leistung über der Zeit oder die Leistung in Drehzahlinkrementen graphisch dargestellt. Jede andere Darstellung der Mess-, Rechen- oder Zwischenergebnisse ist ohne weiteres denkbar und mit der Auswertevorrichtung realisierbar.

Nach dem Ende der Leistungsprüfung wird der Reihenmotor 26 abgestellt und kann vom Prüfstand 10 gelöst werden, das heißt, die Abdichtungsvorrichtung 30, die Multikupplungsvorrichtung 28 und die Niederhaltevorrichtung 32 werden von dem Prüfling entfernt. Die Haltevorrichtungen 24 bewegen sich in eine Ausgangslage zurück und lösen derart die Fixierung des Reihenmotors 26. Sind alle Verbindungen mit den Vorrichtungen des Prüfstandes 26 gelöst, wird dieser noch von der Hebevorrichtung getragen, welche den Reihenmotor wieder aus der Prüfposition weg verbringt und zurück auf die Transporteinrichtung.

Mittels der Schraubvorrichtung 24 wird der Reihenmotor 26 wieder auf der Transportvorrichtung montiert beziehungsweise dessen Transport auf dieser gesichert, so dass der Weitertransport zu einer Stelle, an der ein nächster Produktionsschritt vorgesehen ist, erfolgen kann.

Fig. 2 zeigt eine Draufsicht auf den Leistungsprüfstand 10. Dabei wurde in dieser Figur diejenigen Bauelemente mit den gleichen Bezugszeichen versehen, die bereits in der Fig. 1 eingeführt wurden und auch in dieser Figur gezeigt sind.

Insbesondere zeigt sich in dieser Ansicht, dass das Gestell 12 in einer horizontalen Ebene 52 rahmenartig ausgebildet ist. Die Schraubvorrichtungen 24 sind an zwei Seiten des Rahmens gegenüberliegend angeordnet. Auf einer dritten Seite ist die Anlassereinheit aus Anlasservorrichtung 16, Kupplung 18 sowie Mess- und Kupplungsvorrichtung 20 auf der Tischvorrichtung 14 angeordnet.

Der Reihenmotor 26 ist in seiner Prüfposition dargestellt und wurde über die vierte Seite in den Prüfstand 10 verbracht. Diese bevorzugte Anordnung der verschiedenen Vorrichtungen am Prüfstand 10 hat den besonderen Vorteil, dass diese besonders übersichtliche und zugänglich angeordnet sind. Mögliche Störungen können daher häufig schon bei einem ersten Kontrollblick erkannt werden. Zudem lässt sich der Prüfstand 10 auf einfache Weise in den Produktionsablauf integrieren, weil dieser von einer Seite vollständig zugänglich ist.

**Patentansprüche**

1. Verfahren zur Leistungsermittlung eines Verbrennungsmotors (26), mit einer Messvorrichtung zur Erfassung des zeitlichen Verlaufs der Drehzahl sowie des Drehmomentverlaufes einer Abtriebswelle des Verbrennungsmotors (26), **dadurch gekennzeichnet, dass** zur Ermittlung der Leistung zu einem bestimmten Zeitpunkt ausschließlich der zeitliche Verlauf der Drehzahl sowie des Drehmoments gemessen wird, und wobei der Verbrennungsmotor (26) innerhalb einer solchen Zeitspanne geprüft wird, bei welcher keine Notwendigkeit einer Zwangskühlung besteht, dass der Verbrennungsmotor (26) durch einen Anlasser (16) bis zum Erreichen einer vorgegebenen für den Verbrennungsmotor (26) spezifischen Drehzahl angetrieben wird, dass der Verbrennungsmotor (26) bei Erreichen der vorgegebenen spezifischen Drehzahl zum selbsttätigen Betrieb gestartet wird, dass der Anlasser (16) nach Erreichen der vorgegebenen spezifischen Drehzahl oder, wenn der Verbrennungsmotor im Eigenbetrieb läuft, abgeschaltet wird und dass der Anlasser (16) von dem Verbrennungsmotor (26) entkoppelt wird.

2. Verfahren nach Anspruch 1, **dadurch gekennzeichnet, dass** die Leistungen des Verbrennungsmotors zu dem bestimmten Zeitpunkt gemäß der Formel
$P(t) = M(t) [Nm] * n(t) / 9550$ berechnet wird, mit
$P(t)$ = Leistung P zum bestimmten Zeitpunkt (t),
$M(t)$ = Drehmoment der Abtriebswelle bei dem bestimmten Zeitpunkt (t),
$n(t)$ = Drehzahl bei dem bestimmten Zeitpunkt (t).

3. Verfahren nach Anspruch 1 oder 2, **dadurch gekennzeichnet, dass** der Verbrennungsmotor (26) im Eigenbetrieb bis auf eine maximale Nenndrehzahl beschleunigt wird.

4. Verfahren nach Anspruch 3, **dadurch gekennzeichnet, dass** die Beschleunigung unter Vorgabe eines Volllastwertes für die Drehzahl erfolgt.

5. Verfahren nach einem der vorgenannten Ansprüche, **dadurch gekennzeichnet, dass** eine Anzahl von Leistungswerten des Verbrennungsmotors (26) zu festgelegten Drehzahlwerten ermittelt wird, dass die Leistungspunkte zwischen den gemessenen Drehzahlen durch ein Interpolationsverfahren, insbesondere ein lineares, verbunden werden, und dass die derart ermittelte Leistungskurve in Abhängigkeit von der Drehzahl und gegebenenfalls den Messwerten gespeichert werden.

6. Verfahren nach einem der vorgenannten Ansprüche, **dadurch gekennzeichnet, dass** der Verbrennungsmotor (26) in einem für diese Art der Leistungsprüfung eingerichteten Prüfstand (10) getestet wird.

7. Verfahren nach Anspruch 6, **dadurch gekennzeichnet, dass** der Verbrennungsmotor (26) auf eine Prüfposition im Prüfstand (10) gebracht wird, die als Stelle zur Durchführung der Leistungsprüfung vorgesehen ist.

8. Verfahren nach Anspruch 6 oder 7, **dadurch gekennzeichnet, dass** der Verbrennungsmotor (26) an der Prüfposition mit dem Prüfstand (10) fest verbunden wird.

9. Verfahren nach einem der Ansprüche 1,3 oder 4, **dadurch gekennzeichnet, dass** der Anlasser (16) durch eine Kupplungsvorrichtung (18) an die Abtriebswelle des Verbrennungsmotors (26) angekuppelt wird.

10. Verfahren nach einem der Ansprüche 1,3 oder 4, **dadurch gekennzeichnet, dass** der Anlasser (16) durch Zwischenfügung einer Mess- und Kupplungsvorrichtung (20) an die Abtriebswelle des Verbrennungsmotors (26) angekuppelt wird.

11. Verfahren nach einem der vorgenannten Ansprüche, **dadurch gekennzeichnet, das** eine Kraftstoffversorgungseinrichtung (28) an den Verbrennungsmotor (26) angeschlossen wird.

12. Verfahren nach einem der vorgenannten Ansprüche, **dadurch gekennzeichnet, dass** Steuer- beziehungsweise Datenleitungen zur Ansteuerung des Verbrennungsmotors (26) an dessen Steuerungseinrichtung angeschlossen werden.

13. Verfahren nach Anspruch 6, 7 oder 8, **dadurch gekennzeichnet, dass** eine Abgasableitungsvorrichtung (30) an ein Abgassystem des verbrennungsmotors (26) angeschlossen wird, und dass gegebenenfalls entstehende Abgase während der Prüfung aus dem Bereich des Prüfstandes (10) weggeleitet werden.

14. Verfahren nach einem der vorgenannten Ansprüche, **dadurch gekennzeichnet, dass** durch eine Auswertevorrichtung die Messwerte von Drehzahl und Drehmoment erfasst und gegebenenfalls graphisch dargestellt sowie zur weiteren Datenverarbeitung bereitgestellt werden.

15. Verfahren nach einem der vorgenannten Ansprüche, **dadurch gekennzeichnet, dass** durch eine Steuerungseinrichtung ein Prüfablauf gesteuert beziehungsweise geregelt wird.

16. Leistungsprüfstand für einen Verbrennungsmotor, mit einer Messvorrichtung zur Messung des zeitlichen Verlaufs der Drehzahl und des Drehmomentverlaufes, mit einem Gestell (12), in dem der Verbrennungsmotor (26) in einer Prüfposition fixierbar ist, mit einem Anlasser (16), der wenigstens zeitweise mit dem Verbrennungsmotor (26) verbindbar ist und mit einer Datenverarbeitungsanlage zur Steuerung des Ablaufes des Leistungsmessversuches, **dadurch gekennzeichnet, dass** eine Vorrichtung zur Zwangskühlung des Verbrennungsmotors, insbesondere eine Vorrichtung zur Flüssigkühlmittelzuführung, vermieden ist dass der Verbrennungsmotor innerhalb einer solchen Zeitspanne prüfbar ist, bei welcher keine Notwendigkeit einer Zwangskühlung besteht, dass der Anlasser (16) dafür ausgelegt ist, den Verbrennungsmotor (26) auf eine Leerlaufdrehzahl anzutreiben und dass der Verbrennungsmotor (26) in den Eigenbetrieb überführbar ist.

17. Leistungsprüfstand nach Anspruch 16, **dadurch gekennzeichnet, dass** eine Mess- und Kupplungsvorrichtung (20) zwischen einer Welle des Anlassers (16) und der Abtriebswelle des Verbrennungsmotors (26) angeordnet ist.

18. Leistungsprüfstand nach Anspruch 17, **dadurch gekennzeichnet, dass** eine Tischvorrichtung (14) vorhanden ist, die mit dem Gestell (12) fest verbunden und auf welcher der Anlasser (16) angeordnet ist.

19. Leistungsprüfstand nach einem der Ansprüche 17 oder 18, **dadurch gekennzeichnet, dass** die Mess- und Kupplungsvorrichtung (20) auf der Tischvorrichtung (14) angeordnet ist.

20. Leistungsprüfstand nach einem der Ansprüche 17, 18 oder 19, **dadurch gekennzeichnet, dass** die Mess- und Kupplungsvorrichtung (20) an eine Abtriebswelle des Verbrennungsmotors (26) an- oder abkuppelbar ist.

21. Leistungsprüfstand nach einem der Ansprüche 16 bis 20, **dadurch gekennzeichnet, dass** eine Kraftstoffkupplungsvorrichtung (28) am Gestell (12) angeordnet ist, durch welche eine Kraftstoffversorgungseinrichtung (28) mit einem Treibstoffsystem verbindbar ist.

22. Leistungsprüfstand nach einem der Ansprüche 16 bis 21, **dadurch gekennzeichnet, dass** eine Abdichtvorrichtung (30) an ein Abgassystem des Verbrennungsmotors (26) anschließbar ist, durch die das gegebenenfalls anfallende Abgas des Verbrennungsmotors (26) wegleitbar ist.

23. Leistungsprüfstand nach einem der Ansprüche 16 bis 22, **dadurch gekennzeichnet, dass** wenigstens eine Schraubvorrichtung (24) am Gestell (12) angeordnet ist, durch die der zur Leistungsprüfung vorgesehene Verbrennungsmotor (26) von einer Transportvorrichtung lösbar beziehungsweise auf einer fixierbar ist.

24. Leistungsprüfstand nach einem der Ansprüche 16 bis 23, **dadurch gekennzeichnet, dass** eine Hebevorrichtung (23) am Gestell (12) angeordnet ist, durch welche der Verbrennungsmotor (26) von einer Transportposition auf der Transportvorrichtung in eine Prüfposition oder umgekehrt verbringbar ist.

25. Leistungsprüfstand nach Anspruch 24, **dadurch gekennzeichnet, dass** ein Niederhalter (32) am Gestell (12) angeordnet ist, durch den der Verbrennungsmotor (26) gegen das Gestell (12) oder die Hebevorrichtung (23) verspannbar und für den Prüfbetrieb gegen Losrütteln sicherbar ist.

26. Leistungsprüfstand nach einem der Ansprüche 16 bis 25, **dadurch gekennzeichnet, dass** wenigstens eine Haltevorrichtung (42, 50) am Gestell (12) angeordnet ist, durch welche der Verbrennungsmotor (26) in der Prüfposition fixierbar ist.

27. Leistungsprüfstand nach einem der Ansprüche 16 bis 26, **dadurch gekennzeichnet, dass** eine Anschlussvorrichtung vorhanden ist, mittels derer Anschluss- oder Steuerleitungen des Verbrennungsmotors (26) an die Datenverarbeitungsanlage anschließbar sind.

28. Leistungsprüfstand nach einem der Ansprüche 16 bis 27, **dadurch gekennzeichnet, dass** die Datenverarbeitungsanlage mit einer Auswertevorrichtung verbindbar ist.

29. Leistungsprüfstand nach einem der Ansprüche 16 bis 28, **dadurch gekennzeichnet, dass** die Datenverarbeitungsanlage dafür eingerichtet ist, die verschiedenen Bauelemente, insbesondere die Hebevorrichtung (23), die wenigstens eine Schraubvorrichtung (24), die Anschlussvorrichtung (28), die wenigstens eine Haltevorrichtung (42, 50), die Abdichtvorrichtung (30) sowie den Niederschalter (32) über Signalleitungen anzusteuern und den Ablauf des Leistungsmessversuches zu steuern.

30. Leistungsprüfstand nach einem der Ansprüche 16 bis 27 und 29, **dadurch gekennzeichnet, dass** die Datenverarbeitungsanlage dafür eingerichtet ist, die Auswertung der Messung vorzunehmen.

**Claims**

1. A method for detecting the power of a combustion engine (26), comprising a measuring apparatus for detecting the progression the rotational speed over time and the progression of torque of a drive shaft of the combustion engine (26), **characterised in that** for determining the power only the progression of the rotational speed over time and the talk are measured at a certain point in time, with the combustion engine (26) being checked within such a period of time, in which there is no necessity for forced cooling, the combustion engine (26) is driven by a starter (16) until reaching a predetermined rotational speed specific to the combustion engine (26), the combustion engine (26) is started for automatic operation upon reaching the predetermined specific rotational speed, the starter (16) is cut off after reaching the predetermined specific rotational speed or, when the combustion engine runs by itself, and the starter (16) is decoupled from the combustion engine (26).

2. A method according to claim 1, **characterised in that** the powers of the combustion engine at a specific point in time is calculated according to the formula P(t) = M(t) [Nm] * n(t) / 9550, with

P(t) = power P at specific point in time (t);

M(t) = torque of drive shaft at the specific point in time (t);

n(t) = rotational speed at the specific point in time (t).

3. A method according to claim 1 or 2, **characterised in that** the combustion engine (26), when it runs itself, is accelerated to a maximum nominal speed.

4. A method according to claim 3, **characterised in that** the acceleration occurs by predetermining that the full-load value for the speed.

5. A method according to one of the preceding claims, **characterised in that** a number of power values of the combustion engine (26) is determined at fixed speed values, the power points between the measured speeds are connected by interpolation process, especially a linear one, and the power curve thus determined is stored depending on the speed and optionally the measured values.

6. A method according to one of the preceding claims, **characterised in that** the combustion engine (26) is tested in a test stand (10) which is setup for this kind of power testing.

7. A method according to claim 6, **characterised in that** the combustion engine (26) is brought to a test position in the test stand (10) which is provided as a place for performing the power test.

8. A method according to claim 6 or 7, **characterised in that** the combustion engine (26) is rigidly connected at the testing position with the test stand (10).

9. A method according to one of the claims 1, 3 or 4, **characterised in that** the starter (16) is coupled by a coupling apparatus (18) to the drive shaft of the combustion engine (26).

10. A method according to one of the claims 1, 3 or 4, **characterised in that** the starter (16) is coupled to the drive shaft of the combustion engine (26) by interposing and measuring and coupling apparatus (20).

11. A method according to one of the preceding claims, **characterised in that** a fuel supply device (28) is connected to the combustion engine (26).

12. A method according to one of the preceding claims, **characterised in that** control or data lines for triggering the combustion engine (26) are connected to its control device.

13. A method according to one of the claims 6, 7 or 8, **characterised in that** an exhaust gas discharge apparatus (30) is connected to an exhaust gas system of the combustion engine (26) and optionally occurring exhaust gases are guided away during the test from the area of the test stand (10).

14. A method according to one of the preceding claims, **characterised in that** the measured values of rotational speed and torque are detected by an evaluation apparatus and are optionally displayed graphically and provided for further data-processing.

15. A method according to one of the preceding claims, **characterised in that** a test sequence is controlled or regulated by a control device.

16. A test stand for a combustion engine, comprising a measuring apparatus for measuring the progression of rotational speed over time and the progression of torque, a frame (12) in which the combustion engine (26) can be fixed in a test position, a starter (16) which can be connected at least temporarily with the combustion engine (26), and the data-processing system for controlling the sequence of the power measuring test, **characterised in that** an apparatus for forced cooling of the combustion engine, especially an apparatus for the supply of fluid coolant, is avoided, the combustion engine can be tested within such period of time in which there is no necessity of a forced cooling, the starter (16) is designed to drive the combustion engine (26) to an idle speed and the combustion engine (26) can be transferred to running by itself.

17. A test stand according to claim 16, **characterized in that** a measuring and coupling apparatus (20) is arranged between a shaft of the starter (16) and the drive shaft of the combustion engine (26).

18. A test stand according to claim 17, **characterized in that** a table apparatus (14) is present which is connected with the frame (12) in a fixed manner and on which the starter (16) is arranged.

19. A test stand according to one of the claims 17 or 18, **characterized in that** the measuring and coupling apparatus (20) is arranged on the table apparatus (14).

20. A test stand according to one of the claims 17, 18 or 19, **characterized in that** the measuring and coupling apparatus (20) can be coupled to or on couple from a drive shaft of the combustion engine (26).

21. A test stand according to one of the claims 16 to 20, **characterized in that** a fuel coupling apparatus (28) is arranged on the frame (12), through which a fuel supply device (28) can be connected with a fuel system.

22. A test stand according to one of the claims 16 to 21, **characterized in that** a sealing apparatus (30) can be connected to an exhaust system of the combustion engine (26), through which the optionally occurring exhaust gas of the combustion engine (26) can be guided away.

23. A test stand according to of the claims 16 to 22, **characterized in that** a screwing apparatus (24) is arranged on the frame (12), through which the combustion engine (26) provided for power testing can be detached from a transport apparatus or be fixed on the same.

24. A test stand according to one of the claims 16 to 23, **characterized in that** a lifting apparatus (23) is arranged on the frame (12), through which the combustion engine (26) can be brought from a transport position on the transport apparatus to a testing position or vice-versa.

25. A test stand according to claim 24, **characterized in that** a retainer (32) is arranged on the frame (12), through which the combustion engine (26) can be clamped against the frame (12) or the lifting apparatus (23) and can be secured against loosening by vibrations for the testing operation.

26. A test stand according to one of the claims 16 to 25, **characterized in that** at least one holding apparatus (42, 50) is arranged on the frame (12), through which the combustion engine (26) can be fixed in the testing position.

27. A test stand according to one of the claims 16 to 26, **characterized in that** a connection in apparatus is present, by means of which the connection or control lines of the combustion engine (26) can be connected to the data-processing system.

28. A test stand according to one of the claims 16 to 27, **characterized in that** the data-processing system can be connected with an evaluation apparatus.

29. A test stand according to one of the claims 16 to 28, **characterized in that** the data-processing system is set up for triggering via signal lines the various components, especially the lifting apparatus (23), the at least one screwing apparatus (24), the connection apparatus (28), the at least one holding apparatus (42, 50), the sealing apparatus (30) and at the retainer (32), and for controlling the sequence of the power measuring test.

30. A test stand according to one of the claims 16 to 27 and 29, **characterized in that** the data-processing system is set up to carry out the evaluation of the measurement.

## Revendications

1. Procédé pour la détermination de la puissance d'un moteur à combustion interne (26), avec un dispositif de mesure pour mesurer l'évolution dans le temps de la vitesse de rotation et l'évolution du couple d'un arbre de sortie du moteur à combustion interne (26), **caractérisé en ce que** pour déterminer la puissance, seule l'évolution dans le temps de la vitesse de rotation et du couple est mesurée à un moment donné, et dans lequel le moteur à combustion interne (26) est contrôlé dans un intervalle de temps au cours duquel il n'y a pas de nécessité de refroidissement forcé, **en ce que** le moteur à combustion interne (26) est entraîné par un démarreur (16) jusqu'à ce qu'il ait atteint une vitesse de rotation prédéterminée spécifique du moteur à combustion interne (26), **en ce que** le moteur à combustion interne (26) est démarré pour fonctionner de façon autonome lorsque la vitesse de rotation spécifique prédéterminée est atteinte, **en ce que** le démarreur (16) est arrêté quand la vitesse de rotation spécifique prédéterminée est atteinte ou quand le moteur à combustion interne fonctionne de façon autonome, et **en ce que** le démarreur (16) est découplé du moteur à combustion interne (26).

2. Procédé selon la revendication 1, **caractérisé en ce que** les puissances du moteur à combustion interne au moment donné sont calculées selon la formule

$$P(t) = M(t)\,[\text{Nm}] \times n(t)\,/\,9550$$

où
P(t) = puissance P au moment donné (t),
M(t) = couple de rotation de l'arbre de sortie au moment donné (t),
n(t) = vitesse de rotation au moment donné (t).

3. Procédé selon la revendication 1 ou 2, **caractérisé en ce que** le moteur à combustion interne (26) en fonctionnement autonome est accéléré jusqu' à une vitesse de rotation nominale maximale.

4. Procédé selon la revendication 3, **caractérisé en ce que** l'accélération est réalisée en spécifiant une valeur de plein régime pour la vitesse de rotation.

5. Procédé selon l'une des revendications précédentes, **caractérisé en ce qu'**un certain nombre de valeurs de puissance du moteur à combustion interne (26) est déterminé à certaines valeurs de vitesse de rotation, **en ce que** les points de puissance entre les vitesses de rotation mesurées sont reliés par une méthode d'interpolation, en particulier linéaire, et **en**

**ce que** la courbe de puissance ainsi déterminée est enregistrée en fonction de la vitesse de rotation et éventuellement des valeurs de mesure.

6. Procédé selon l'une des revendications précédentes, **caractérisé en ce que** le moteur à combustion interne (26) est testé sur un banc d'essai (10) aménagé pour ce type d'essai de puissance.

7. Procédé selon la revendication 6, **caractérisé en ce que** le moteur à combustion interne (26) est mis dans une position d'essai sur le banc d'essai (10) qui est prévu comme endroit d'exécution de l'essai de puissance.

8. Procédé selon la revendication 6 ou 7, **caractérisé en ce que** le moteur à combustion interne (26) est relié de façon fixe au banc d'essai (10) dans la position d'essai.

9. Procédé selon l'une des revendications 1, 3 ou 4, **caractérisé en ce que** le démarreur (16) est couplé par un dispositif d'accouplement (18) à l'arbre de sortie du moteur à combustion interne (26).

10. Procédé selon l'une des revendications 1, 3 ou 4, **caractérisé en ce que** le démarreur (16) est couplé en intercalant un dispositif de mesure et d'accouplement (20) à l'arbre de sortie du moteur à combustion interne (26).

11. Procédé selon l'une des revendications précédentes, **caractérisé en ce qu'**un dispositif d'alimentation en carburant (28) est raccordé au moteur à combustion interne (26).

12. Procédé selon l'une des revendications précédentes, **caractérisé en ce que** les lignes de commande et de données pour la conduite du moteur à combustion interne (26) sont raccordées à son dispositif de commande.

13. Procédé selon la revendication 6, 7 ou 8, **caractérisé en ce qu'**un dispositif d'évacuation des gaz d'échappement (30) est raccordé à un système d'échappement du moteur à combustion interne (26) et **en ce que** les gaz d'échappement éventuellement produits pendant l'essai sont évacués hors de la zone du banc d'essai (10).

14. Procédé selon l'une des revendications précédentes, **caractérisé en ce qu'**un dispositif d'analyse relève les valeurs mesurées de vitesse de rotation et de couple et les représente éventuellement sous forme graphique et les prépare en vue du traitement ultérieur des données.

15. Procédé selon l'une des revendications, **caractéri-**

sé en ce qu'un dispositif de commande régule ou commande l'exécution de l'essai.

16. Banc d'essai de puissance pour un moteur à combustion interne, avec un dispositif de mesure pour la mesure de l'évolution dans le temps de la vitesse de rotation et du couple de rotation, avec un bâti (12) dans lequel le moteur à combustion interne (26) peut être fixé dans une position d'essai, avec un démarreur (16) qui peut être relié au moins temporairement avec le moteur à combustion interne (26) et avec une installation de traitement de données pour commander le déroulement de l'essai de mesure de la puissance, **caractérisé en qu'**il n'y a pas besoin d'un dispositif de refroidissement forcé du moteur à combustion interne, en particulier d'un dispositif d'alimentation en liquide de refroidissement, en ce que le moteur à combustion interne peut être testé dans un intervalle de temps tel qu'il n'y a pas de nécessité de refroidissement forcé, en ce que le démarreur (16) est conçu pour amener le moteur à combustion interne (26) à une vitesse de rotation au point mort et en ce que le moteur à combustion interne (26) peut être amené en fonctionnement autonome.

17. Banc d'essai de puissance selon la revendication 16, **caractérisé en ce qu'**un dispositif de mesure et d'accouplement (20) est disposé entre un arbre du démarreur (16) et l'arbre de sortie du moteur à combustion interne (26).

18. Banc d'essai de puissance selon la revendication 17, **caractérisé en ce qu'**il est prévu un dispositif de table (14) qui est relié de manière fixe au bâti (12) et sur lequel le démarreur (16) est disposé.

19. Banc d'essai de puissance selon l'une des revendications 17 ou 18, **caractérisé en ce que** le dispositif de mesure et d'accouplement (20) est disposé sur le dispositif de table (14).

20. Banc d'essai de puissance selon l'une des revendications 17, 18 ou 19, **caractérisé en ce qu'**un dispositif de mesure et d'accouplement (20) peut être couplé et découplé sur l'arbre de sortie du moteur à combustion interne (26).

21. Banc d'essai de puissance selon l'une des revendications 16 à 20, **caractérisé en ce qu'**il est prévu sur le bâti (12) un dispositif de couplage de carburant (28) par lequel un dispositif d'alimentation en carburant (28) peut être relié à un circuit de carburant.

22. Banc d'essai de puissance selon l'une des revendications 16 à 21, **caractérisé en ce qu'**un dispositif d'étanchéité (30) peut être raccordé à un système d'échappement du moteur à combustion interne (26) pour évacuer les gaz d'échappement éventuellement produits par le moteur à combustion interne (26).

23. Banc d'essai de puissance selon l'une des revendications 16 à 22, **caractérisé en ce qu'**il est prévu sur le bâti (12) au moins un dispositif de vissage (24) permettant de démonter le moteur à combustion interne (26) destiné à l'essai de puissance d'un dispositif de transport et de le fixer sur celui-ci.

24. Banc d'essai de puissance selon l'une des revendications 16 à 23, **caractérisé en ce qu'**il est prévu sur le bâti (12) un dispositif de levage (23) permettant d'amener le moteur à combustion interne (26) d'une position de transport sur le dispositif de transport à une position d'essai et inversement.

25. Banc d'essai de puissance selon la revendication 24, **caractérisé en ce qu'**il est prévu sur le bâti (12) un mécanisme d'appui (32) par lequel le moteur à combustion interne (26) peut être serré contre le bâti (12) ou le dispositif de levage (23) et fixé pour empêcher les vibrations de le détacher pendant l'essai.

26. Banc d'essai de puissance selon l'une des revendications 16 à 25, **caractérisé en ce qu'**il est prévu sur le bâti (12) au moins un dispositif de maintien (42, 50) permettant de fixer le moteur à combustion interne (26) dans la position d'essai.

27. Banc d'essai de puissance selon l'une des revendications 16 à 26, **caractérisé en ce qu'**il est prévu un dispositif de raccordement au moyen duquel des conduites de raccordement ou de commande du moteur à combustion interne (26) peuvent être raccordées à l'installation de traitement de données.

28. Banc d'essai de puissance selon l'une des revendications 16 à 27, **caractérisé en ce que** l'installation de traitement de données peut être reliée à un dispositif d'analyse.

29. Banc d'essai de puissance selon l'une des revendications 16 à 28, **caractérisé en ce que** l'installation de traitement de données est équipée pour activer les différents éléments constitutifs, en particulier le dispositif de levage (23), l'au moins un dispositif de vissage (24), le dispositif de raccordement (28), l'au moins un dispositif de maintien (42, 50), le dispositif d'étanchéité (30) ainsi que le mécanisme d'appui (32) en passant par des lignes de commande et pour commander le déroulement de la mesure de la puissance.

30. Banc d'essai de puissance selon l'une des revendications 16 à 27 et 29, **caractérisé en ce que** l'installation de traitement de données est équipée pour réaliser l'analyse de la mesure.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 56064638 A
- US 3898875 A
- US 5361628 A